# EUROPÄISCHE PATENTSCHRIFT

(11) **EP 4 139 757 B1**
(45) Veröffentlichungstag und Bekanntmachung des Hinweises auf die Patenterteilung: **20.05.2026**
(21) Anmeldenummer: 21739579.7
(22) Anmeldetag: 22.06.2021
(51) Int. Cl.: G05B 19/4099, B23P 6/00

(54) **VERFAHREN UND ANORDNUNG ZUM REPARIEREN EINES WERKSTÜCKS**
METHOD AND ASSEMBLY FOR REPAIRING A WORKPIECE
PROCÉDÉ ET AGENCEMENT DE RÉPARATION D'UNE PIÈCE

(30) Priorität: 03.07.2020 EP 20183996
(43) Veröffentlichungstag der Anmeldung: 01.03.2023
(73) Patentinhaber: Siemens Aktiengesellschaft, 80333 München (DE)
(72) Erfinder: HEINRICH, Christoph, 86609 Donauwörth (DE); LUDWIG, Christoph Ernst, 81673 München (DE); FISCHER, Jan, 81541 München (DE); ROSEN, Roland, 82229 Seefeld (DE); WEINERT, Nils, 80798 München (DE); WINCHERINGER, Christoph, 81369 München (DE)
(74) Vertreter: Siemens Patent Attorneys
(86) Internationale Anmeldenummer: PCT/EP2021/066984
(87) Internationale Veröffentlichungsnummer: WO 2022/002695

(56) Entgegenhaltungen:
- WO-A2-2019/070644
- US-A1- 2014 277 669
- US-A1- 2016 082 664
- US-A1- 2018 297 114
- US-A1- 2020 166 907

## Beschreibung

Bei der Herstellung von Produkten in einer Fertigungsanlage werden an einem jeweiligen Werkstück häufig viele unterschiedliche Bearbeitungsschritte, wie z. B. Bohren, Formen, Schleifen oder Fräsen durchgeführt, bis das Werkstück eine vorgegebene Form erreicht. Das Werkstück durchläuft zu diesem Zweck in der Regel verschiedene Werkzeugstationen der Fertigungsanlage, um am Ende oder nach einem spezifischen Bearbeitungsschritt einer Qualitätskontrolle unterzogen zu werden, beispielsweise durch Sichtkontrolle oder durch automatisierte Kontrollmessungen.

Falls bei der Qualitätskontrolle ein Toleranzbereich überschritten wird, entscheidet bisher in vielen Fällen ein Experte, ob das Werkstück zu reparieren ist oder nicht. Zur Reparatur wird das Werkstück dann in der Regel an einen separaten Reparaturprozess übergeben, um nach Abschluss der Reparatur erneut kontrolliert und gegebenenfalls wieder in den Fertigungsprozess eingegliedert zu werden. Eine solche Vorgehensweise ist jedoch häufig mit einem hohen manuellen Aufwand verbunden.

Relevante Dokumente des Standes der Technik umfassen WO2019/070644 A2 und EP3435259 A1
Es ist Aufgabe der vorliegenden Erfindung, ein Verfahren sowie eine Anordnung zum Reparieren eines Werkstücks zu schaffen, die sich flexibel in einen automatisierten Ablauf eines Fertigungsprozesses integrieren lassen.

Gelöst wird diese Aufgabe durch ein Verfahren mit den Merkmalen des Patentanspruchs 1, durch eine Anordnung mit den Merkmalen des Patentanspruchs 10, durch ein Computerprogrammprodukt mit den Merkmalen des Patentanspruchs 11 sowie durch ein computerlesbares Speichermedium mit den Merkmalen des Patentanspruchs 12.

Zum Reparieren eines Werkstücks werden eine Anforderungsangabe über eine vom Werkstück zu erfüllende Anforderung sowie ein numerisches Simulationsmodell zum Simulieren eines physikalischen Verhaltens des Werkstücks eingelesen. Als physikalisches Verhalten kann hierbei insbesondere ein mechanisches, elektrisches, statisches oder dynamisches Verhalten, eine Elastizität, eine Beanspruchung, eine mechanische oder elektrische Belastbarkeit und/oder eine Eigenfrequenz des Werkstücks simuliert werden. Weiterhin wird mittels eines Sensors eine aktuelle Form des Werkstücks erfasst. Bei Feststellen einer Abweichung der aktuellen Form von einer Sollform des Werkstücks wird anhand des Simulationsmodells ein jeweiliges physikalisches Verhalten des Werkstücks in der aktuellen Form sowie in einer mittels eines 3D-Druckers ergänzten Form simuliert. Weiterhin wird anhand der Anforderungsangabe geprüft, ob das jeweils simulierte physikalische Verhalten die Anforderung erfüllt. Abhängig vom Prüfungsergebnis wird das Werkstück dann entweder in der aktuellen Form belassen, durch den 3D-Drucker ergänzt oder verworfen.

Zum Ausführen des erfindungsgemäßen Verfahrens sind eine Anordnung zum Reparieren eines Werkstücks, ein Computerprogrammprodukt sowie ein computerlesbares, vorzugsweise nichtflüchtiges Speichermedium vorgesehen.

Das erfindungsgemäße Verfahren sowie die erfindungsgemäße Anordnung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Mittels der Erfindung kann eine Qualitätsprüfung, eine Entscheidung über eine Reparaturfähigkeit eines Werkstücks sowie gegebenenfalls dessen automatische Reparatur funktionell zusammengefasst und in einheitlicher Weise in bestehende automatisierte Fertigungsprozesse integriert werden. Eine solche Integration erfordert in vielen Fällen keine oder nur wenige Änderungen an bestehenden Fertigungsanlagen. Darüber hinaus können bei einer Evaluierung einer Qualität bzw. einer Reparaturfähigkeit eines Werkstücks nicht nur dessen geometrische Eigenschaften geprüft werden, sondern auch deren Auswirkungen auf ein physikalisches Verhalten des Werkstücks.

Vorteilhafte Ausführungsformen und Weiterbildungen der Erfindung sind in den abhängigen Ansprüchen angegeben.

Nach einer vorteilhaften Ausführungsform der Erfindung kann im Falle einer Ergänzung des Werkstücks durch den 3D-Drucker auch eine subtraktive Bearbeitung des Werkstücks erfolgen, um das Werkstück in die ergänzte Form zu überführen. Die subtraktive Bearbeitung kann hierbei insbesondere ein Zerspanen, Fräsen, Bohren, Schleifen, Schneiden und/oder Drehen umfassen. Durch die subtraktive Bearbeitung können beispielsweise über die Sollform überstehende Teile des Werkstücks oder überstehendes 3D-Druckmaterial abgetragen werden. Weiterhin kann auch ein nicht überstehender Teil das Werkstücks subtraktiv abgetragen werden, um einen nachfolgenden additiven Auftrag zu ermöglichen oder zu stabilisieren. Die Reihenfolge, in der eine additive Ergänzung und eine subtraktive Bearbeitung vorgenommen werden, muss hierbei nicht vorgegeben sein und kann insbesondere abhängig von den Simulationsergebnissen ermittelt werden. Die Prüfung, ob das simulierte physikalische Verhalten die Anforderung erfüllt, kann insbesondere nach einem jeweiligen additiven und/oder subtraktiven Bearbeitungsschritt erfolgen.

Gemäß einer weiteren vorteilhaften Ausführungsform der Erfindung kann ein Differenzkörper zwischen der Sollform und der aktuellen Form ermittelt werden. Anhand des Differenzkörpers kann ein Gittermodell der Sollform an die aktuelle Form angepasst werden. Die Simulation des physikalischen Verhaltens des Werkstücks in der aktuellen Form kann dann anhand des angepassten Gittermodells erfolgen. Durch einen solchen Differenzkörper zwischen einer ersten und einer zweiten geometrischen Form können insbesondere ein erster Raumbereich, in dem sich beide geometrischen Formen überlappen, ein zweiter Raumbereich, der sich innerhalb der ersten aber außerhalb der zweiten geometrischen Form befindet, sowie ein dritter Raumbereich, der sich außerhalb der ersten aber innerhalb der zweiten geometrischen Form befindet, spezifiziert werden. Der Differenzkörper kann vorzugsweise durch Daten in einem STL-Format (STL: Stereolithography) oder in einem CAD-Format (CAD: Computer Aided Design) dargestellt werden.

Insbesondere kann ein Gittermodell der Sollform durch Morphing in ein Gittermodell der aktuellen Form und/oder in ein Gittermodell der ergänzten Form überführt werden. Das Morphing kann durch geometrische Interpolation von Gitterpunkten der Gittermodelle und/oder durch geometrische Verzerrung eines Gittermodells ausgeführt werden.

Nach einer weiteren vorteilhaften Ausführungsform der Erfindung kann in einem Gittermodell der ergänzten Form ein mit 3D-Druckmaterial auszufüllender Raumbereich ermittelt werden. Dem ermittelten Raumbereich kann eine physikalische Eigenschaft des 3D-Druckmaterials ortsspezifisch zugeordnet werden. Bei der Simulation des physikalischen Verhaltens des Werkstücks in der ergänzten Form kann dann die physikalische Eigenschaft des 3D-Druckmaterials ortsspezifisch berücksichtigt werden. Die physikalische Eigenschaft des 3D-Druckmaterials kann beispielsweise dessen Elastizität, dessen Festigkeit, dessen elektrische oder thermische Leitfähigkeit und/oder dessen spezifisches Gewicht betreffen. Auf diese Weise kann berücksichtigt werden, dass ein mit 3D-Druckmaterial ergänztes Werkstück sich anders verhält oder anders reagiert als ein Werkstück aus originalem Material.

Nach einer vorteilhaften Weiterbildung der Erfindung kann mittels des Simulationsmodells ein digitaler Zwilling des Werkstücks erzeugt werden. Der digitale Zwilling kann dabei an eine aktuell ermittelte Form des Werkstücks, an eine additiv ergänzte oder subtraktiv bearbeitete Form des Werkstücks und/oder ortsspezifisch an eine physikalische Eigenschaft eines 3D-Druckmaterials angepasst werden. Vorzugsweise erfolgt die Anpassung des digitalen Zwillings während der additiven Ergänzung und/oder einer subtraktiven Bearbeitung des Werkstücks fortlaufend. Mittels des digitalen Zwillings können ein Zustand des Werkstücks und insbesondere auch nicht direkt messbare oder nicht gemessene Eigenschaften des Werkstücks vorzugsweise in Echtzeit ermittelt und bei der Prüfung und/oder Reparatur des Werkstücks berücksichtigt werden.

Weiterhin kann zum Überführen des Werkstücks in die ergänzte Form eine Reihenfolge von additiven Ergänzungsschritten und subtraktiven Bearbeitungsschritten, ein Werkzeugweg und/oder ein Werkzeug abhängig von der aktuellen Form, der ergänzten Form und/oder einem Simulationsergebnis ermittelt werden. Auf diese Weise kann insbesondere eine Reparaturstrategie für das Werkstück generiert werden, die hinsichtlich der an das Werkstück gestellten Anforderung optimiert ist.

Darüber hinaus können für das Werkstück nachfolgend vorgesehene Bearbeitungsschritte einer Fertigungskette abhängig von der aktuellen Form, der ergänzten Form und/oder einem Simulationsergebnis modifiziert werden. So kann z.B. bei einem additiv ergänzten Werkstück ein nachfolgender Beschichtungsvorgang modifiziert werden, um eine gegenüber dem Originalmaterial unterschiedliche Oberflächenrauheit eines 3D-Druckmaterials zu kompensieren.

Ein Ausführungsbeispiel der Erfindung wird nachfolgend anhand der Zeichnung näher erläutert. Dabei zeigen jeweils in schematischer Darstellung:
- Figur 1: eine erfindungsgemäße, in eine Fertigungsanlage integrierte Reparatureinheit in verschiedenen Reparaturphasen und
- Figur 2: eine Blockdarstellung der Reparatureinheit.

Insofern in den Figuren die gleichen oder korrespondierende Bezugszeichen verwendet werden, werden hierdurch die gleichen oder korrespondierende Entitäten bezeichnet, die vorzugsweise wie im Zusammenhang mit den betreffenden Figuren beschrieben, implementiert oder realisiert sind.

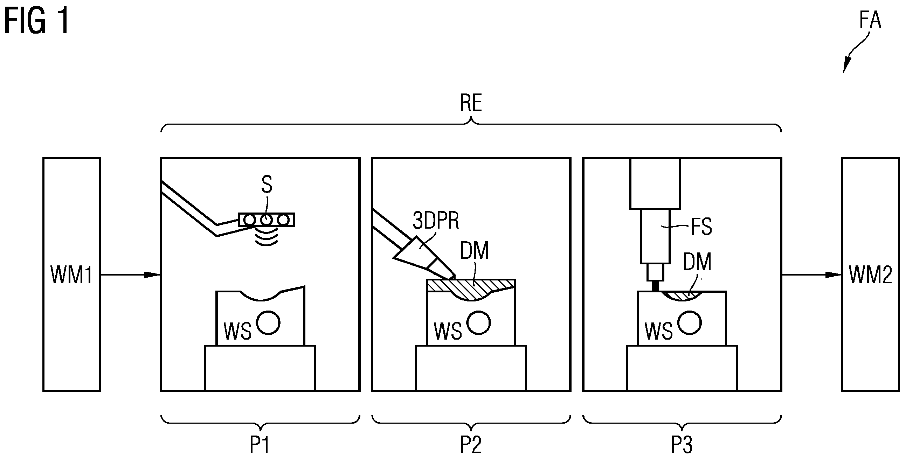

Figur 1 zeigt in schematischer Darstellung eine in eine Fertigungsanlage FA und deren Fertigungsprozess integrierte Reparatureinheit RE als erfindungsgemäße Anordnung zum Reparieren eines Werkstücks WS. Die Fertigungsanlage FA weist neben der Reparatureinheit RE eine Vielzahl von Werkzeugmaschinen zur Bearbeitung von Werkstücken auf.

Im vorliegenden Ausführungsbeispiel sind in Figur 1 aus Übersichtlichkeitsgründen nur eine erste Werkzeugmaschine WM1, die das Werkstück WS an die Reparatureinheit RE übergibt, sowie eine zweite Werkzeugmaschine WM2, die das Werkstück WS von der Reparatureinheit RE übernimmt, explizit dargestellt. Die zweite Werkzeugmaschine WM2 ist hierbei optional. Ohne die zweite Werkzeugmaschine WM2 kann das Werkstück WS auch direkt nach Durchlaufen der Reparatureinheit RE als fertiges Werkstück ausgegeben werden. In diesem Fall kann die Reparatureinheit RE zur automatischen Qualitätskontrolle am Ende eines Fertigungsprozesses und gegebenenfalls zur automatischen Reparatur oder Fertigstellung des Werkstücks WS verwendet werden.

In Figur 1 sind verschiedene Phasen P1, P2 und P3 einer Reparatur des Werkstücks WS durch die Reparatureinheit RE schematisch dargestellt.

In einer ersten Phase P1 wird eine aktuelle Form des Werkstücks WS mittels einer Sensorik S erfasst. Die Sensorik S umfasst einen oder mehrere, vorzugsweise kontaktlose Sensoren. Im vorliegenden Ausführungsbeispiel umfasst die Sensorik S insbesondere einen Scanner, der die aktuelle Form des Werkstücks WS mittels eines Lasers, mittels einer Projektion von strukturiertem Licht und/oder mittels einer oder mehrerer Kameras erfasst.

Die erfasste aktuelle Form des Werkstücks WS wird dann mit einer Sollform des Werkstücks WS verglichen, die nach Bearbeitung durch die Werkzeugmaschine WM1 vorliegen sollte. Die Sollform kann hierbei insbesondere durch ein vorgegebenes CAD-Modell des Werkstücks WS spezifiziert sein.

Falls bei diesem Vergleich eine Abweichung zwischen der aktuellen Form und der Sollform des Werkstücks WS festgestellt wird, simuliert die Reparatureinheit RE mittels eines numerischen Simulationsmodells des Werkstücks WS, wie sich dieses in der aktuellen Form in physikalischer Hinsicht verhalten würde. Insbesondere können hierbei eine mechanische Belastbarkeit, ein dynamisches Verhalten, eine Elastizität, Eigenfrequenzen, eine Kühlfunktionalität und/oder ein thermisches Verhalten des Werkstücks WS simuliert werden. Abhängig davon wird geprüft, ob und/oder inwieweit das simulierte physikalische Verhalten vorgegebene, an das Werkstück WS gestellte technische Anforderungen erfüllt. Letztere können insbesondere Anforderungen an eine räumliche Struktur, an Abmessungen, an eine Belastbarkeit, an eine Elastizität, an eine Haltbarkeit, an ein dynamisches Verhalten, an Eigenfrequenzen, an physikalische, chemische, thermische oder elektrische Eigenschaften und/oder an eine Funktion des Werkstücks WS oder andere für das Werkstück geforderte Rand- oder Nebenbedingungen umfassen. Insbesondere können die Anforderungen ein Einhalten von Toleranzbereichen für vorgegebene physikalische Eigenschaften des Werkstücks WS betreffen. Darüber hinaus können Anforderungen von nachfolgenden Werkzeugmaschinen der Fertigungsanlage FA an das Werkstück WS berücksichtigt werden.

Sofern die technischen Anforderungen durch das Werkstück WS erfüllt werden oder falls keine Abweichung von der Sollform festgestellt wurde, wird das Werkstück WS in der aktuellen Form belassen und an die Werkzeugmaschine WM2 zur weiteren Bearbeitung weitergegeben. Alternativ wird das Werkstück WS direkt als fertiges Werkstück ausgegeben.

Sofern die Anforderungen durch das Werkstück WS in der aktuellen Form nicht erfüllt werden, wird anhand des Simulationsmodells geprüft, ob und/oder inwieweit das Werkstück WS nach einer Reparatur durch additive und/oder subtraktive Bearbeitung die gestellten Anforderungen erfüllen würde.

Zu diesem Zweck wird eine die Anforderungen erfüllende, ergänzte Form des Werkstücks WS ermittelt, die durch additiven Auftrag von 3D-Druckmaterial und gegebenenfalls durch zusätzliche subtraktive Bearbeitung erzeugt werden kann. Die subtraktive Bearbeitung kann hierbei vorgesehen werden, um beispielsweise einen Riss oder eine andere Fehlstelle am Werkstück WS erst so auszufräsen, dass das 3D-Druckmaterial möglichst gut haftet, eine vorgegebene Mindestschichtdicke des additiven Auftrags nicht unterschritten wird, die betreffende Stelle für einen 3D-Drucker zugänglich wird und/oder die betreffende Stelle vom 3D-Druckmaterial möglichst gut ausgefüllt werden kann. Subtraktive Bearbeitungsschritte können auch vorgesehen werden, falls das Werkstück WS in der aktuellen Form oder nach einem additiven Auftrag über eine Zielform hinausreicht.

Anhand der aktuellen Form des Werkstücks WS und der ergänzten Form wird ein Raumbereich ermittelt, der in der ergänzten Form mit 3D-Druckmaterial auszufüllen ist. Diesem Raumbereich werden ortsspezifisch eine oder mehrere physikalische Eigenschaften des 3D-Druckmaterials zugeordnet. Die physikalischen Eigenschaften können hierbei insbesondere eine Festigkeit, eine Elastizität, ein spezifisches Gewicht und/oder eine elektrische oder thermische Leitfähigkeit des 3D-Druckmaterials betreffen.

Ausgehend davon wird mittels des Simulationsmodells das physikalische Verhalten des Werkstücks WS in der ergänzten Form simuliert. Dabei werden die physikalischen Eigenschaften des 3D-Druckmaterials im ermittelten Raumbereich ortsspezifisch berücksichtigt. Abhängig davon wird festgestellt, ob und/oder inwieweit das simulierte physikalische Verhalten des Werkstücks WS in der ergänzten Form die gestellten Anforderungen erfüllt.

Als ergänzte Form kann insbesondere die Sollform des Werkstücks WS gewählt werden. Außer der Sollform können aber auch eine oder mehrere alternative ergänzte Formen gewählt und wie vorstehend beschrieben simuliert werden. Eine alternative ergänzte Form kann insbesondere dann gewählt werden, wenn eine additiv ergänzte Sollform simulationsgemäß nicht den gestellten Anforderungen genügt oder wenn die alternative ergänzte Form die gestellten Anforderungen simulationsgemäß besser erfüllt als eine additiv ergänzte Sollform. Insbesondere kann von der Sollform abgewichen werden, um z. B. eine geringere Belastbarkeit des 3D-Druckmaterials zu kompensieren. Sofern mehrere ergänzte Formen simuliert werden, kann vorzugsweise diejenige ergänzte Form für die Bearbeitung des Werkstücks WS selektiert werden, die die gestellten Anforderungen am besten erfüllt.

Sofern die gestellten Anforderungen durch keine der simulierten ergänzten Formen erfüllt werden, wird das Werkstück WS durch die Reparatureinheit RE automatisch als nicht reparaturfähig verworfen und aus der Fertigungsanlage FA ausgeleitet.

Andernfalls wird das Werkstück WS im vorliegenden Ausführungsbeispiel zu einem 3D-Drucker 3DPR der Reparatureinheit RE weitergegeben. Der 3D-Drucker 3DPR dient zur additiven Ergänzung des Werkstücks WS in einer zweiten Phase P2 der Reparatur. Für den 3D-Druck kann beispielsweise ein sogenanntes Pulverbettverfahren verwendet werden, das insbesondere bei der Herstellung oder additiven Bearbeitung von metallischen Bauteilen Anwendung findet. Die additive Bearbeitung kann dabei auch ein Laserschmelzen und/oder Lasersintern umfassen.

In der zweiten Phase P2 wird das Werkstück WS durch Auftragen von 3D-Druckmaterial DM mittels des 3D-Druckers 3DPR mindestens bis zur ergänzten Form vergrößert. Anschließend wird das additiv vergrößerte Werkstück WS im vorliegenden Ausführungsbeispiel zu einer spanenden Werkzeugmaschine FS der Reparatureinheit RE weitergegeben. Die spanende Werkzeugmaschine FS dient zur subtraktiven Bearbeitung des Werkstücks WS in einer dritten Phase P3 der Reparatur. Die subtraktive Bearbeitung kann insbesondere ein Zerspanen, Fräsen, Bohren, Schleifen, Schneiden und/oder Drehen umfassen. Die spanende Werkzeugmaschine FS ist im vorliegenden Ausführungsbeispiel als Fräsmaschine realisiert. In der dritten Phase P3 wird das Werkstück WS von der durch den 3D-Drucker 3DPR vergrößerten Form durch Abfräsen von überschüssigem 3D-Druckmaterial DM und gegebenenfalls von anderweitig überstehendem Material in die vorgesehene ergänzte Form überführt.

Vorzugsweise kann dann mittels der Sensorik S geprüft werden, ob das Werkstück WS tatsächlich in die ergänzte Form gebracht wurde. Falls dies nicht der Fall ist, kann das Werkstück WS erneut additiv und/oder subtraktiv nachbearbeitet werden.

Es sei angemerkt, dass die Reihenfolge der Phasen P2 und P3 bzw. die Reihenfolge der additiven und subtraktiven Bearbeitungsschritte a priori nicht festgelegt sein muss und von der obigen Beschreibungsreihenfolge insbesondere abhängig von den Simulationsergebnissen abweichen kann. Insbesondere können die additiven und subtraktiven Phasen P2 und P3 auch jeweils mehrmals und in unterschiedlicher Reihenfolge durchlaufen werden. Dabei kann insbesondere ein jeweiliger Bearbeitungsschritt mittels der Sensorik S dahingehend überprüft werden, ob und/oder inwieweit das Werkstück WS eine durch den jeweiligen Bearbeitungsschritt angestrebte Form auch tatsächlich erreicht.

Im vorliegenden Ausführungsbeispiel wird das durch additive und subtraktive Bearbeitung reparierte Werkstück WS an die Werkzeugmaschine WM2 zur weiteren Bearbeitung weitergegeben bzw. direkt als fertiges Werkstück WS ausgegeben.

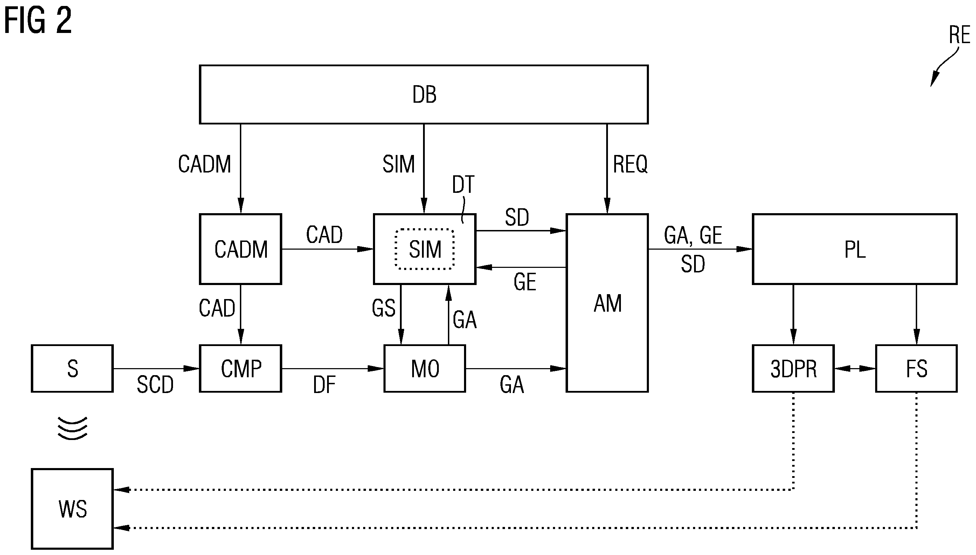

Figur 2 zeigt eine Blockdarstellung der Reparatureinheit RE, der das Werkstück WS zur Prüfung und gegebenenfalls zur Reparatur übergeben wurde.

Zur spezifischen Prüfung und Reparatur des Werkstücks WS liest die Reparatureinheit RE aus einer Datenbank DB ein CAD-Modell (CAD: Computer Aided Design) des Werkstücks WS ein. Das CAD-Modell CADM spezifiziert neben anderen konstruktiven und/oder physikalischen Merkmalen des Werkstücks WS insbesondere dessen geometrische Sollform durch entsprechende CAD-Daten CAD, das heißt durch Konstruktionsdatensätze in einem CAD-Format. Das CAD-Modell CADM bzw. die CAD-Daten CAD umfassen insbesondere ein diskretisiertes Gittermodell GS des Werkstücks WS in seiner Sollform. Durch das Gittermodel GS wird das Werkstück WS in seiner geplanten Sollform spezifiziert.

Weiterhin wird aus der Datenbank DB auch ein numerisches Simulationsmodell SIM des Werkstücks WS eingelesen. Mittels des Simulationsmodells SIM und der CAD-Daten CAD aus dem CAD-Modell CADM wird dann ein digitaler Zwilling DT des Werkstücks WS erzeugt. Ein solcher digitaler Zwilling soll sich virtuell möglichst ähnlich zu seinem realen Gegenstück verhalten. Dieses Verhalten wird in der Regel mittels eines Simulationsmodells simuliert. Im vorliegenden Ausführungsbeispiel dient das numerische Simulationsmodell SIM dazu, ein physikalisches Verhalten des Werkstücks WS insbesondere ein mechanisches Verhalten, ein dynamisches Verhalten, eine Elastizität, eine mechanische Belastbarkeit, Eigenfrequenzen, eine Kühlfunktionalität und/oder ein thermisches Verhalten des Werkstücks WS zu simulieren. Die Simulation kann vorzugsweise mittels eines Finite-Elemente-Verfahrens durchgeführt werden, für das eine Vielzahl numerischer Standardverfahren verfügbar ist. Anhand des virtuellen, simulierten Verhaltens des digitalen Zwillings DT kann so ein Verhalten des realen Werkstücks WS vorhergesagt, bewertet und/oder analysiert werden.

Darüber hinaus wird aus der Datenbank DB eine Anforderungsangabe REQ über eine oder mehrere vom Werkstück WS zu erfüllende, technische Anforderungen eingelesen. Die Anforderungsangabe REQ kann hierbei Anforderungen an das Werkstück WS hinsichtlich einer räumlichen Struktur, seiner Abmessungen, einer Belastbarkeit, einer Elastizität, einer Haltbarkeit, eines dynamischen Verhaltens, seiner Eigenfrequenzen, seiner physikalischen, chemischen, thermischen oder elektrischen Eigenschaften, seiner Funktion und/oder anderer Rand- oder Nebenbedingungen betreffen. Die Anforderungsangabe REQ kann insbesondere Angaben in Form von Toleranzbereichen oder Schwellwerten umfassen.

Zur Ermittlung der aktuellen Form des Werkstücks WS wird dieses mittels der Sensorik S gescannt. Die resultierenden Scanergebnisse werden in Form von Scandaten SCD von der Sensorik S ausgegeben. Die Scandaten SCD spezifizieren die aktuelle Form des Werkstücks WS z. B. als Punktwolke oder durch Datensätze im STL-Format (STL: Stereolithographie).

Die Scandaten SCD werden von der Sensorik S zu einem Vergleichsmodul CMP übermittelt. Darüber hinaus werden auch die CAD-Daten CAD aus dem CAD-Modell CADM dem Vergleichsmodul CMP zugeführt. Anhand der Scandaten SCD und der CAD-Daten CAD vergleicht das Vergleichsmodul CMP die aktuelle Form des Werkstücks WS mit seiner Sollform. Falls hierbei eine Abweichung festgestellt wird, erzeugt das Vergleichsmodul CMP einen Differenzkörper zwischen der Sollform und der aktuellen Form. Der Differenzkörper wird durch einen Differenzkörperdatensatz DF vorzugsweise im STL-Format oder in einem anderen CAD-Datenformat spezifiziert.

Der Differenzkörperdatensatz DF wird vom Vergleichsmodul CMP zu einem Morphingmodul MO übermittelt. Darüber hinaus wird auch das Gittermodell GS des Werkstücks WS in Sollform vom digitalen Zwilling DT dem Morphingmodul MO zugeführt. Das Morphingmodul MO passt das Gittermodell GS an die erfasste aktuelle Form des Werkstücks WS an, indem das Gittermodell GS durch Morphing anhand des Differenzkörperdatensatzes DF in ein angepasstes, die aktuelle Form des Werkstücks WS spezifizierendes Gittermodell GA überführt wird. Das angepasste Gittermodell GA wird vom Morphingmodul MO zum digitalen Zwilling DT übermittelt. Die Simulation des digitalen Zwillings DT bzw. des Werkstücks WS in der aktuellen Form erfolgt dann anhand des angepassten Gittermodells GA vorzugsweise mittels eines auf das angepasste Gittermodell GA diskretisierten Finite-Elemente-Verfahrens.

Um festzustellen, ob das Werkstück WS in der aktuellen Form die an das Werkstück WS gestellten Anforderungen erfüllt, werden Simulationsdaten SD über das simulierte Verhalten des Werkstücks WS vom digitalen Zwilling DT zu einem Analysemodul AM übermittelt. Die Simulationsdaten SD spezifizieren hierbei das simulierte physikalische Verhalten des Werkstücks WS. Weiterhin werden dem Analysemodul AM auch das angepasste Gittermodell GA sowie die die Anforderungen spezifizierende Anforderungsangabe REQ zugeführt. Durch das Analysemodul AM wird anhand der Simulationsdaten SD, anhand des angepassten Gittermodells GA sowie anhand der Anforderungsangabe REQ geprüft, ob und/oder inwieweit das Werkstück WS in der aktuellen Form die Anforderungen erfüllen würde. Hierbei kann z. B. geprüft werden, ob Eigenfrequenzen oder eine Belastbarkeit des Werkstücks WS in der aktuellen Form innerhalb vorgegebener Toleranzbereiche liegen oder nicht.

Sofern durch das Analysemodul AM festgestellt wird, dass das Werkstück WS in der aktuellen Form die Anforderungen erfüllt, entscheidet das Analysemodul AM, dass das Werkstück WS in der aktuellen Form belassen wird und veranlasst die Reparatureinheit RE das Werkstück WS an die Werkzeugmaschine WM2 zur weiteren Bearbeitung weiterzugeben bzw. direkt als fertiges Werkstück auszugeben.

Sofern durch das Analysemodul AM festgestellt wird, dass die Anforderungen durch das Werkstück WM in der aktuellen Form nicht erfüllt werden, prüft das Analysemodul AM mittels des digitalen Zwillings DT, ob und/oder inwieweit das Werkstück WS nach einer Reparatur durch additive und/oder subtraktive Bearbeitung die gestellten Anforderungen erfüllen würde. Zu diesem Zweck wird - wie oben bereits erwähnt - durch das Analysemodul AM eine von der Sollform abgeleitete, additiv ergänzte Form des Werkstücks WS ermittelt, die durch additiven Auftrag von 3D-Druckmaterial und gegebenenfalls durch zusätzliche subtraktive Bearbeitung erzeugt werden kann. Dabei wird insbesondere geprüft, ob sich die aktuelle Form durch additiven Auftrag zur Sollform ergänzen lässt. In diesem Fall kann die Sollform als ergänzte Form gewählt werden.

Die ergänzte Form wird in diskretisierter Weise durch ein Gittermodell GE der ergänzten Form spezifiziert. Im Gittermodell GE sind einem mit 3D-Druckmaterial auszufüllenden Raumbereich eine oder mehrere physikalische Eigenschaften des 3D-Druckmaterials ortsspezifisch zugeordnet.

Das Gittermodell GE wird vom Analysemodul AM zum digitalen Zwilling DT übermittelt. Anhand des Gittermodells GE wird dann ein physikalisches Verhalten des digitalen Zwillings DT bzw. des Werkstücks WS in der ergänzten Form simuliert. Wie oben bereits erwähnt, werden dabei die physikalischen Eigenschaften des 3D-Druckmaterials im ermittelten Raumbereich ortsspezifisch berücksichtigt. Die resultierenden, das physikalische Verhalten spezifizierenden Simulationsdaten SD werden dann vom digitalen Zwilling DT zum Analysemodul AM übermittelt und dort dahingehend ausgewertet, ob und/oder inwieweit das simulierte physikalische Verhalten des Werkstücks WS in der ergänzten Form die gestellten Anforderungen erfüllen würde.

Die vorstehenden Schritte können auch für verschiedene ergänzte Formen ausgeführt werden.

Sofern die gestellten Anforderungen durch keine der simulierten ergänzten Formen erfüllt werden, entscheidet das Analysemodul AM, dass das Werkstück WS als nicht reparaturfähig zu verwerfen ist und veranlasst die Reparatureinheit RE, das Werkstück WS aus der Fertigungsanlage FA auszuleiten.

Sofern mindestens eine ergänzte Form die gestellten Anforderungen erfüllt, werden die zugehörigen Simulationsdaten SD, das zugehörige angepasste Gittermodell GA sowie das Gittermodell GE dieser ergänzten Form vom Analysemodul AM zu einem Planungs- und Steuermodul PL übermittelt.

Das Planungs- und Steuermodul PL dient insbesondere zum Ermitteln einer Reihenfolge von additiven Ergänzungsschritten und subtraktiven Bearbeitungsschritten, zum Ermitteln eines Werkzeugwegs und/oder zum Ermitteln eines Werkzeugs abhängig von der aktuellen Form, abhängig von der ergänzten Form und/oder abhängig von den Simulationsdaten SD. Daneben dient das Planungs- und Steuermodul PL zum Ansteuern der additiven und subtraktiven Werkzeugmaschinen 3DPR und FS gemäß der ermittelten Reparaturstrategie.

Das Planungs- und Steuermodul PL kann die Reparaturstrategie vorzugsweise anhand eines Differenzkörpers zwischen der aktuellen Form und der ergänzten Form des Werkstücks WS ermitteln. Sofern der Differenzkörper anzeigt, dass sich die aktuelle Form vollständig innerhalb der ergänzten Form befindet, kann der zugehörige Differenzkörperdatensatz direkt als Eingabe für die additive Ergänzung verwendet werden.

Sofern der Differenzkörper anzeigt, dass die ergänzte Form vollständig innerhalb der aktuellen Form liegt, können Minimaldicken des Differenzkörpers berechnet und mit minimal abtragbaren Schichtdicken verglichen werden. Falls eine Minimaldicke des Differenzkörpers kleiner als eine minimal abtragbare Schichtdicke ist, kann der Differenzkörper entsprechend vergrößert werden. Der vergrößerte Differenzkörper kann dann als Eingabe für den 3D-Drucker verwendet werden. Nach dem benötigten additiven Auftrag kann das Werkstück WS dann im subtraktiven Bearbeitungsschritt unter Einhaltung von minimal abtragbaren Schichtdicken durch die subtraktive Bearbeitung in die gewünschte Form gebracht werden.

Sofern der Differenzkörper anzeigt, dass sowohl die aktuelle Form über die ergänzte Form als auch die ergänzte Form über die aktuelle Form an verschiedenen Stellen übersteht, kann das Planungs- und Steuermodul PL eine Kombination der vorstehenden Bearbeitungsschritte ermitteln.

Gemäß der generierten Reparaturstrategie steuert das Planungs- und Steuermodul PL den 3D-Drucker 3DPR sowie die Fräsmaschine FS zur additiven und subtraktiven Bearbeitung des Werkstücks WS an.

Vorzugsweise wird während der additiven und subtraktiven Bearbeitung des Werkstücks WS oder nach einem jeweiligen additiven oder subtraktiven Bearbeitungsschritt, fortlaufend eine jeweilige aktuelle Form des Werkstücks WS durch die Sensorik S erfasst. Anhand der jeweils aktuell erfassten Form wird das Gittermodell GA und insbesondere der digitale Zwilling DT sowie die Simulation fortlaufend an das reale Werkstück WS angepasst. Vorzugsweise kann nach jedem Bearbeitungsschritt das Werkstück WS in der jeweils aktuell bearbeiteten Form erneut simuliert werden, und gegebenenfalls kann hierbei eine neue ergänzte Form ermittelt werden. Sofern eine neue ergänzte Form ermittelt wird, kann die Reparaturstrategie während der Reparatur modifiziert werden. Dabei können auch Veränderungen im Bearbeitungsprozess, z. B. hinsichtlich einer Druckgeschwindigkeit, einer Drucktemperatur oder einer Fräsgeschwindigkeit berücksichtigt werden.

Weiterhin kann vorgesehen sein, dass das Planungs- und Steuermodul PL abhängig von den Simulationsdaten SD und den Gittermodellen GA und GE eine Werkzeugmaschine der Fertigungsanlage FA dazu veranlasst, nachfolgend vorgesehene Bearbeitungsschritte zu modifizieren.

## Patentansprüche

1. Verfahren zum Reparieren eines Werkstücks (WS), wobei
a) eine Anforderungsangabe (REQ) über eine vom Werkstück (WS) zu erfüllende Anforderung sowie ein numerisches Simulationsmodell (SIM) zum Simulieren eines physikalischen Verhaltens des Werkstücks (WS) eingelesen werden,
b) mittels eines Sensors (S) eine aktuelle Form des Werkstücks (WS) erfasst wird,
c) bei Feststellen einer Abweichung der aktuellen Form von einer Sollform des Werkstücks (WS) anhand des Simulationsmodells (SIM) ein jeweiliges physikalisches Verhalten des Werkstücks (WS) in der aktuellen Form sowie in einer mittels eines 3D-Druckers (3DPR) ergänzten Form simuliert wird,
d) anhand der Anforderungsangabe (REQ) geprüft wird, ob das jeweils simulierte physikalische Verhalten die Anforderung erfüllt, und
e) das Werkstück (WS) abhängig vom Prüfungsergebnis entweder in der aktuellen Form belassen, durch den 3D-Drucker (3DPR) ergänzt oder verworfen wird.

2. Verfahren nach Anspruch 1, **dadurch gekennzeichnet, dass** im Falle einer Ergänzung des Werkstücks (WS) durch den 3D-Drucker (3DPR) auch eine subtraktive Bearbeitung des Werkstücks (WS) erfolgt, um das Werkstück (WS) in die ergänzte Form zu überführen.

3. Verfahren nach einem der vorhergehenden Ansprüche, **dadurch gekennzeichnet,**
**dass** ein Differenzkörper zwischen der Sollform und der aktuellen Form ermittelt wird,
**dass** ein Gittermodell (GS) der Sollform anhand des Differenzkörpers an die aktuelle Form angepasst wird, und
**dass** die Simulation des physikalischen Verhaltens des Werkstücks (WS) in der aktuellen Form anhand des angepassten Gittermodells (GA) erfolgt.

4. Verfahren nach einem der vorhergehenden Ansprüche, **dadurch gekennzeichnet,**
**dass** ein Gittermodell (GS) der Sollform durch Morphing in ein Gittermodell (GA) der aktuellen Form und/oder in ein Gittermodell (GE) der ergänzten Form überführt wird.

5. Verfahren nach einem der vorhergehenden Ansprüche, **dadurch gekennzeichnet,**
**dass** in einem Gittermodell (GE) der ergänzten Form ein mit 3D-Druckmaterial (DM) auszufüllender Raumbereich ermittelt wird,
**dass** dem ermittelten Raumbereich eine physikalische Eigenschaft des 3D-Druckmaterials (DM) ortsspezifisch zugeordnet wird, und
**dass** bei der Simulation des physikalischen Verhaltens des Werkstücks (WS) in der ergänzten Form die physikalische Eigenschaft des 3D-Druckmaterials (DM) ortsspezifisch berücksichtigt wird.

6. Verfahren nach einem der vorhergehenden Ansprüche, **dadurch gekennzeichnet,**
**dass** mittels des Simulationsmodells (SIM) ein digitaler Zwilling (DT) des Werkstücks (WS) erzeugt wird, und
**dass** der digitale Zwilling (DT)
- an eine aktuell ermittelte Form des Werkstücks (WS),
- an eine additiv ergänzte oder subtraktiv bearbeitete Form des Werkstücks (WS) und/oder
- ortsspezifisch an eine physikalische Eigenschaft eines 3D-Druckmaterials (DM)
angepasst wird.

7. Verfahren nach Anspruch 6, **dadurch gekennzeichnet,**
**dass** die Anpassung des digitalen Zwillings (DT) während der additiven Ergänzung und/oder einer subtraktiven Bearbeitung des Werkstücks (WS) fortlaufend erfolgt.

8. Verfahren nach einem der Ansprüche 2 bis 7, **dadurch gekennzeichnet,**
**dass** zum Überführen des Werkstücks (WS) in die ergänzte Form eine Reihenfolge von additiven Ergänzungsschritten und subtraktiven Bearbeitungsschritten, ein Werkzeugweg und/oder ein Werkzeug abhängig von der aktuellen Form, der ergänzten Form und/oder einem Simulationsergebnis ermittelt wird.

9. Verfahren nach einem der vorhergehenden Ansprüche, **dadurch gekennzeichnet,**
**dass** für das Werkstück (WS) nachfolgend vorgesehene Bearbeitungsschritte einer Fertigungskette abhängig von der aktuellen Form, der ergänzten Form und/oder einem Simulationsergebnis modifiziert werden.

10. Anordnung (RE) zum Reparieren eines Werkstücks (WS), eingerichtet zum Ausführen eines Verfahrens nach einem der vorhergehenden Ansprüche.

11. Computerprogrammprodukt umfassend Befehle, die bewirken, dass die Anordnung nach Anspruch 10 die Verfahrensschritte nach einem der Ansprüche 1 bis 9 ausführt.

12. Computerlesbares Speichermedium mit einem Computerprogrammprodukt nach Anspruch 11.

## Claims

1. Method for repairing a workpiece (WS), wherein
a) a requirement specification (REQ) about a requirement to be met by the workpiece (WS) and a numeric simulation model (SIM) for simulating a physical behavior of the workpiece (WS) are read in,
b) a present shape of the workpiece (WS) is acquired by means of a sensor (S),
c) if a deviation of the present shape from an intended shape of the workpiece (WS) is established on the basis of the simulation model (SIM), a respective physical behavior of the workpiece (WS) in the present shape and in a shape supplemented by means of a 3D printer (3DPR) is simulated,
d) it is checked on the basis of the requirement specification (REQ) whether the respective simulated physical behavior meets the requirement, and
e) the workpiece (WS) is either left in the present shape, supplemented by the 3D printer (3DPR), or discarded in dependence on the check result.

2. Method according to Claim 1, **characterized in that** in the case of a supplementation of the workpiece (WS) by the 3D printer (3DPR), a subtractive processing of the workpiece (WS) is also carried out to convert the workpiece (WS) into the supplemented shape.

3. Method according to any one of the preceding claims, **characterized in that**
a difference body between the intended shape and the present shape is ascertained,
a grid model (GS) of the intended shape is adapted on the basis of the difference body to the present shape, and
the simulation of the physical behavior of the workpiece (WS) in the present shape is carried out on the basis of the adapted grid model (GA).

4. Method according to any one of the preceding claims, **characterized in that**
a grid model (GS) of the intended shape is converted by morphing into a grid model (GA) of the present shape and/or into a grid model (GE) of the supplemented shape.

5. Method according to any one of the preceding claims, **characterized in that**
a spatial area to be filled using 3D printing material (DM) is ascertained in a grid model (GE) of the supplemented shape,
a physical property of the 3D printing material (DM) is associated specifically by location with the ascertained spatial area, and
in the simulation of the physical behavior of the workpiece (WS) in the supplemented shape, the physical property of the 3D printing material (DM) is taken into consideration specifically by location.

6. Method according to any one of the preceding claims, **characterized in that**
a digital twin (DT) of the workpiece (WS) is generated by means of the simulation model (SIM), and
the digital twin (DT) is adapted
- to a presently ascertained shape of the workpiece (WS),
- to an additively supplemented or subtractively processed shape of the workpiece (WS), and/or
- specifically by location to a physical property of a 3D printing material (DM).

7. Method according to Claim 6, **characterized in that**
the adaptation of the digital twin (DT) takes place progressively during the additive supplementation and/or a subtractive processing of the workpiece (WS).

8. Method according to any one of Claims 2 to 7, **characterized in that**
to convert the workpiece (WS) into the supplemented shape, a sequence of additive supplementation steps and subtractive processing steps, a tool path, and/or a tool is ascertained in dependence on the present shape, the supplemented shape, and/or a simulation result.

9. Method according to any one of the preceding claims, **characterized in that**
processing steps of a manufacturing chain provided subsequently for the workpiece (WS) are modified in dependence on the present shape, the supplemented shape, and/or a simulation result.

10. Arrangement (RE) for repairing a workpiece (WS), configured to execute a method according to any one of the preceding claims.

11. Computer program product, comprising commands which cause the arrangement according to Claim 10 to execute the method steps according to any one of Claims 1 to 9.

12. Computer-readable memory medium having a computer program product according to Claim 11.

## Revendications

1. Procédé pour la réparation d'une pièce (WS), dans lequel
a) une spécification d'exigence (REQ) concernant une exigence à satisfaire par la pièce (WS) ainsi qu'un modèle de simulation (SIM) numérique pour la simulation d'un comportement physique de la pièce (WS) sont mis en mémoire,
b) une forme actuelle de la pièce (WS) est détectée au moyen d'un capteur (S),
c) lors de la constatation d'un écart de la forme actuelle par rapport à une forme théorique de la pièce (WS), un comportement physique respectif de la pièce (WS) sous la forme actuelle ainsi que sous une forme complétée au moyen d'une imprimante 3D (3DPR) est simulé à l'aide du modèle de simulation (SIM),
d) à l'aide de la spécification d'exigence (REQ), il est vérifié si le comportement physique simulé respectivement satisfait à l'exigence, et
e) la pièce (WS), en fonction du résultat de vérification, est soit laissée sous la forme actuelle, soit complétée par le biais de l'imprimante 3D (3DPR), soit rejetée.

2. Procédé selon la revendication 1, **caractérisé en ce que**, dans le cas d'une opération visant à compléter la pièce (WS) par le biais de l'imprimante 3D (3DPR), il s'effectue également un usinage soustractif de la pièce (WS) afin de convertir la pièce (WS) en la forme complétée.

3. Procédé selon l'une des revendications précédentes, **caractérisé**
**en ce qu'**un corps différentiel est déterminé entre la forme théorique et la forme actuelle,
**en ce qu'**un modèle de grille (GS) de la forme théorique est adapté à la forme actuelle à l'aide du corps différentiel, et
**en ce que** la simulation du comportement physique de la pièce (WS) sous la forme actuelle s'effectue à l'aide du modèle de grille adapté (GA).

4. Procédé selon l'une des revendications précédentes, **caractérisé**
**en ce qu'**un modèle de grille (GS) de la forme théorique est converti par le biais d'un morphing en un modèle de grille (GA) de la forme actuelle et/ou en un modèle de grille (GE) de la forme complétée.

5. Procédé selon l'une des revendications précédentes, **caractérisé**
**en ce qu'**une zone spatiale à remplir de matériau d'impression 3D (DM) est déterminée dans un modèle de grille (GE) de la forme complétée,
**en ce qu'**une propriété physique du matériau d'impression 3D (DM) est associée de manière spécifique au site à la zone spatiale déterminée, et
**en ce que**, lors de la simulation du comportement physique de la pièce (WS) sous la forme complétée, la propriété physique du matériau d'impression 3D (DM) est prise en compte de manière spécifique au site.

6. Procédé selon l'une des revendications précédentes, **caractérisé**
**en ce qu'**un jumeau numérique (DT) de la pièce (WS) est produit au moyen du modèle de simulation (SIM), et
**en ce que** le jumeau numérique (DT) est adapté
- à une forme actuellement déterminée de la pièce (WS),
- à une forme complétée de manière additive ou usinée de manière soustractive de la pièce (WS) et/ou
- de manière spécifique au site à une propriété physique d'un matériau d'impression 3D (DM).

7. Procédé selon la revendication 6, **caractérisé**
**en ce que** l'adaptation du jumeau numérique (DT) s'effectue en continu pendant l'opération visant à compléter de manière additive la pièce (WS) et/ou un usinage soustractif de la pièce (WS).

8. Procédé selon l'une des revendications 2 à 7, **caractérisé en ce que**, pour la conversion de la pièce (WS) en la forme complétée, une succession d'étapes visant à compléter de manière additive et d'étapes d'usinage soustractif, un parcours d'outil et/ou un outil sont déterminés en fonction de la forme actuelle, de la forme complétée et/ou d'un résultat de simulation.

9. Procédé selon l'une des revendications précédentes, **caractérisé**
**en ce que** des étapes d'usinage prévues ultérieurement d'une chaîne de fabrication pour la pièce (WS) sont modifiées en fonction de la forme actuelle, de la forme complétée et/ou d'un résultat de simulation.

10. Agencement (RE) pour la réparation d'une pièce (WS), conçu pour l'exécution d'un procédé selon l'une des revendications précédentes.

11. Produit de programme informatique comportant des instructions qui amènent l'agencement selon la revendication 10 à exécuter les étapes de procédé selon l'une des revendications 1 à 9.

12. Support de stockage lisible par ordinateur avec un produit de programme informatique selon la revendication 11.
